# EUROPEAN PATENT SPECIFICATION

(11) **EP 0 683 708 B1**
(45) Date of publication and mention of the grant of the patent: **23.12.1998**
(21) Application number: 93908056.0
(22) Date of filing: 31.03.1993
(51) Int. Cl.: B23G 5/06

(54) **THREAD TAPPING CUTTING TOOL**
GEWINDEBOHRWERKZEUG
OUTIL COUPANT DE TARAUDAGE

(30) Priority: 11.02.1993 HU 9300345
(43) Date of publication of application: 29.11.1995
(73) Proprietor: VILMANYI, Laszlo, H-1091 Budapest (HU)
(72) Inventor: VILMANYI, Lászlo, H-1091 Budapest (HU); VILMANYI, Lászloné, H-1091 Budapest (HU); VILMANYI, Gábor, H-1091 Budapest (HU); SIMON, János, H-1155 Budapest (HU)
(74) Representative: Kilian, Helmut, Dr.
(86) International application number: PCT/HU93/00019
(87) International publication number: WO 94/17946

(56) References cited:
- FR-A- 1 333 181
- US-A- 1 478 414

## Description

The present invention relates to a thread tapping cutting tool according to the precharacterising portion of claim 1 (see FR-A 1 333 181) which , due to its special design with increased chip-room and reduced load on cutting wings, is especially suitable for thread tapping - preferably with increased speed - in the range of increased sizes, preferably in the range of M12 to M68 and C1/4" to C3", respectively.

It is known that taps are multiple-edge cutting tools, by means of which threads will be cut in bores. To become simplified, the thread tapping toool (tap-drill) can be considered a screw, in which flutes are machined in order to form cutting edges. The tap drill as known, has a working part provided with chamfer part and control part arranged at one end of a generally cylindrical shaft. The other end of the shaft is preferably of rectangular section, so as to serve for fitting-on. The working part has at least two cutting wings and flutes between the said cutting wings at least alongside the cutting wings in order to store the chip already separated and to introduce cooling and/or lubricating media if necessary.

During thread tapping, the two basic requirements are: accuracy and productivity. As known, the accuracy is assured by the accuracy of the tool itself, on the one hand, and by means of proper guiding of the tool,on the other hand; while productivity is obtained by increasing the cutting speed, being however this latter limited by production of heat and chip that shall be removed from the bore at the rate of production. It is obvious, that two contradictory requirements shall be met simultaneously: the working surface of the tap--drill in contact with the part to be machined shall be as large as possible in order to achieve an accurate guiding, on the one hand, and tile reduction of friction and heat generation requires the active cutting surface to be minimized, on the other hand. (Dr. Bakondi - Dr. Kardos: Manufacturing Technology Vol. I. p. 226. - Educational Publisher 1963.)

The state of the art is well reflected in section 6.3 "Tap drills" in the book: Mrs. L. Arató - M. Vági: Screw Threads, Táncsics Publisher, 1968, which presents a detailed description of the tap-drills known and used at present, together with their design, geometry and dimensions. According to the reference mentioned, the recommended value for the width of cutting wing (land width) is 0.35 D in the case of three-flute tap-drills and 0.28 D in the case of four-flute tap-drills, were D represents the tap-drill outer diameter. According to the literature, the flute depth is equal to the core diameter dₜ which, in turn, is equal to 0.4 to 0.5 D as a result of a tradeoff; in fact , the value of the core diameter dₜ shall be selected so as to obtain a chip-room as large as possible and, at the same time, the proper strength will be still maintained. Otherwise, experiences show that the chip crowded into the flutes due to improper flute sect ion results in tap breakage more frequently than insufficient strength of the tap-drills.

It is known that the tap-drill has a working part provided with a chamfer part and a control part arranged at one end of the shank. Within this, the proper selection of the lengths of these parts is very essential. The chamfer length is always determined by taking the cutting conditions into consideration. The chamfer lenght is different e.g. in the case of hand- or machine tapping (drill-set), screw tapping in soft- or hard materials etc. Generally, it can be stated that tap-drills with short chamfer lenght are used in the practice, and the length of the control part exceeds - often several times - the chamfer length. Based on the related literature, land relief in the chamfer part of tap-drill is absolutely necessary, while it is unnecessary - or even disadvantageous - in the control part, except machined or milled nut-taps where the tap-drill shall not be reversed when machining threads in nuts, in fact, the chip accumulated in the flutes cannot be crowded between the land and the machined surface. The value of relief angle in the chamfer part as known is 10 tin 12° in the case of machine-taps and nut-taps, while 6 to 8° in the case of hand-taps.

An interesting solution is described in the patent specification No. HU 70 793, where alternatively one or other side of subsequent threads on the cutting wings will be cut away, thus preventing the chip from being crowded and the tap-drill from being jammed. Thus, the cutting edges of the tap-drill fit loosely and run more freely in the threads formed, while the two sides of threads will be alternatively cut by one and the other side of cutting edges.

The solution described in the patent specification DE-A 36 43 744 is well suitable to be used primarily in the case of tap-drills for readjusting the wear during normal use or tapping threads to be galvanized (i.e.threads of unusual dimensions), in which the tap-drill outer diameter is variable.

As a conclusion, it can be stated relating to the known solutions, that the tapping speed that can be obtained can be considered as identical and the dimensioning of the tap-drills can also be considered as traditional (see the data presented above relating to tapping-drills).

The present invention aims at presenting a solution that enables a significantly increased cutting speed to be obtained as compared to that used in the case of known traditional solutions and that can be implemented by means of traditional manufacturing methods by using known - not special - basic material and, in addition, the said solution can be used in a wide range of sizes and bore diameters.

These objects are achieved with thread cutting tool having the features of claim 1.

We carried out experiments that revealed that an increased friction between the tap-drill and the workpiece and, frequently, any jamming will occur between the chip generated and the surfaces of tap-drill and workpiece, rather than directly between the tap-drill and workpiece surface. Experiments were also carried out, how to reduce the friction, that is the load acting on the cutting edges during thread tapping. It has been found that - while breaking away from the former professional prejudices - the width of the cutting wings can be significantly reduced - down to 0.2 to 0.02 times the outer diameter D -, without influencing the strength of the tap-drill significantly (which is very important as it is a cutting tool that is concerned). Other dimensions of the tap-drill shall also be altered to fit the proposed width of cutting wing.

Reduction of the width of cutting wing - thus, reduction of load - also enables the core diameter dₜ to be reduced; according to our experiments, sizes less than 0.35 times the outer diameter D can also be implemented. Again, as our experiments show, this involves the benefit, that the chip-room will be increased, thus allowing larger space to store the chip generated and to remove it without crowding.

In order to implement the width of the cutting wing proposed by us safely, we developed a solution which enables the load acting on the cutting wing to be reduced as compared to the solutions known at present. In our solution, the chamfer length and its proportion to the control length is significantly increased in relation to the known tap-drills. Thus, the chip-separation will be shared between several cutting wing sections, which assures a more uniform load that is more evenly distributed along the chamfer length. As the experiments show that in order to obtain proper strength of the cutting tool while reducing the width of cutting wings and the core diameter, the chamfer length shall be equal to at least the half length of the working part.

In respect of the cutting energy, it is known that the use of relief improves the cutting conditions significantly. It is known that the chamfer part has always to be provided with relief and it is also the same in our case. However, in the case of known solutions, the land surface of the chamfer part - due to the relatively large width of cutting wings - is curved. We found that it is preferable to use plane land surface in the chamfer part in our case; in fact, this design eliminates the occurence of any jamming due to the elastic nature of materials during cutting.

Thus, the present invention relates to a thread tapping cutting tool, which has a working part provided with a chamfer part and a control part arranged at one end of a shank, while the other end of the said shank is preferably of rectangular section so as to serve for fitting-on. The working part contains at least two cutting wings and flutes between the said cutting wings at least alongside the cutting wings, suitable to store the chip already separated and to introduce cooling and/or lubricating media if necessary. Within the working part, the chamfer length is equal to at least the half length of working part.

According to the invention, the width of the cutting wings is designed to a value not exceeding 0.2 to 0.02 times the tap-drill outer diameter, while the core diameter to a value not exceeding 0.35 times the tap-drill outer diameter. Furthermore, the land surface of chamfer part is designed as plane surface so as the relief angle exceeds 5° and is preferably 15°.

Our experiments show that, in the case of through-hole tapping and/or pre-tapping by hand, it is recommended that the chamfer lengt will be further increased: the chamfer lenght is equal to at least 75 % of the length of working part.

In a preferred embodiment of the thread tapping cutting tool, the length of working part is equal up to 10 pitches while the chamfer length is equal to the length of control part in the case of dead-hole tapping and/or final tapping by hand. The solution in which the working part is of 6-pitch length is very preferable.

In the case of thread tapping cutting tool designed as described above, it is not absolutely necessary to use land relief in the control part. In fact, this would be very difficult and would require high accuracy in machining. If necessary, land relief can also be used in the control part in our case; nevertheless, a value of 0.02 mm is sufficient:

In a very recommended embodiment of the thread tapping cutting tool according to the present invention, the width of cutting wings will be up to 0.056 times the tap-drill outer diameter while the core diameter will be up to 0.2 to 0.25 times the tap-drill outer diameter.

A possible design of the thread tapping cutting tool according to the present invention will be described in detail as an example, based on the annexed drawing, where
- fig. 1 shows the sketch of the tool in side-view,
- fig. 2 shows the sectional view A-A of the chamfer part,
- fig. 3 shows the magnified view of one of the cutting wings of the tool shown in fig. 2.

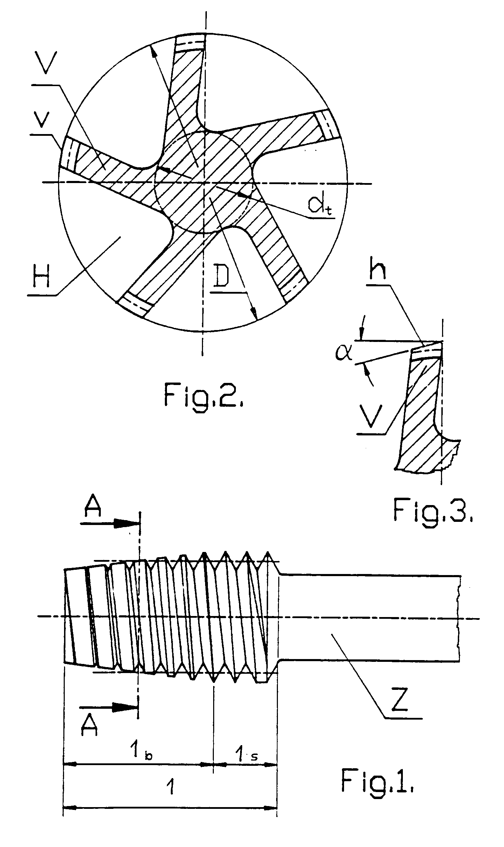

The thread tapping cutting tool shown in fig. 1 has a working part 1 provided with chamfer part 1_{b} and control part 1ₛ arranged at one end of a shank Z. The other end of the shank Z is preferably of rectangular section for fitting-on the shank Z. According to our invention, the working part 1 contains at least two cutting wings V - five in our case as shown in fig. 2 - and flutes H between the said cutting wings V at least alongside the cutting wings V, serving the purposes of storing the chip already separated and introducing cooling and/or lubricating media if necessary. Within the working part 1, the chamfer lenght 1_{b} is equal to at least the half length of working part 1 - in our case at least 75 % as an example.

Fig. 2 shows a sectional view of the chamfer part 1_{b} at section A-A. According to our invention, the width v of the cutting wings V will be designed to a value not exceeding 0.2 to 0.02 times the tap-drill outer diameter D - i.e. v ≦ 0.2 D to 0.02 D - while the core diameter dₜ of cutting wings to a value not exceeding 0.35 times the tapdrill outer diameter D - i.e. dₜ ≦ 0.35 D. The figure shows clearly that, as a result of reduced core diameter dₜ and width v of cutting wings V according to our solution, flutes H of large section are present between the cutting wings V at least alongside the said cutting wings V, that serve for purposes of storing the chip already separated and introducing cooling-and/or lubricating media if necessary.

Fig. 3 shows a magnified part-view of the cutting wings V. It is clearly shown that the land h of the chamfer part 1_{b} is designed as plane surface so as the relief angle α exceeds 5° and is preferably 15°.

The function of the thread tapping cutting tool according to the present invention is described below in detail. The thread tapping cutting tool as described in our solution can be well utilized as either hand-tap or machine-tap. In our case, it is essential that the chamfer part 1_{b} length is equal at least to the half length of the working part 1 length within the working part 1. In the case of through--hole tapping and/or pre-tapping by hand, the chamfer part 1_{b} length is further increased. In such cases, tie chamfer part 1_{b} length will be at least 75 % of the working part 1 length.

It is known that in conformity with the German Standard DIN in force at present, the chamfer part 1_{b} lengths are as follows:
- Taper "A": 6-pitch
- Taper "B": 4-pitch + guide edge
- Taper "C": 2 to 3-pitch
- Taper "D": 4-pitch
- Taper "E": 1.5-pitch.

In our solution much longer chamfer part 1_{b} as compared to that of known solutions described above will be used - even of 12-pitch length -, which has the advantage that the chip separation is more evenly distributed, thus reducing the load acting on the cutting edges. Preferably, the width v of the cutting wings V and the core diameter dₜ is also selected as described previously - i.e. v ≦ 0.056 D:dₜ ≦ 0.2 D to 0.25 D -, thus obtaining a very favourable flute section. Tie flutes H thus obtained are well suitable to store the chip already separated and to introduce any known cooling and/or lubricating media if necessary.

If the tread tapping cutting tool is used for dead-hole tapping and/or final tapping by hand (where the tap-drill shall also be reversed), a thread tapping cutting tool will be used as cutting tool, in which the working part 1 is of up to ten-pitch length, while the chamfer part 1_{b} length is equal to the length of the control part 1ₛ. In such cases, an embodiment with working part 1 of six-pitch length is very recommended.

In the thread tapping cutting tool designed according to the present invention, a land relief in the control part 1ₛ is not necessarily needed - that is, it is unnecessary. This facilitates the production of the tool: in fact, the relief is an operation that requires special machine and high professional skill. Of course, it is also allowed to use land relief in the case of the thread tapping cutting tool according to the present invention; in this case the relief value shall be up to 0.02 mm.

An advantage of the solution according to the present invention is, that it can be used in a wide range of thread sizes. For example, the solution can also be well used in the range of M12 to M68 and C1/4" to C3", respectively, without any particular difficulties. The advantages of the solution also appear in the basic material used for the production of the tape-drill; in fact, our experiments show that no special restrictions are necessary. Preferably, the thread tapping tools can be made of high-speed steel or alloy steel; if a cutting tool of special durability shall be produced, the durability of cutting edges can be improved by applying some kind of PVD layer (Protecting Very Durable layer)- e.g. titanium nitrate, titanium carbonitride - in order to extend the service life.

By using the thread tapping cutting tool described in the present invention, a speed of as much as 200 to 250 rev./min can be achieved and bores of size in respect of both length and diameter can be tapped that have been unprecedented in the literature so far. The service life of the tap-drill according to the present invention is significantly extended as compared to the known tap-drills made of same material; many times as many workpieces as in the case of known solutions can be machined reliably without sharpening and without any failure and breakage of the tool.

## Claims

1. Thread tapping cutting tool, which has a working part(1)provided with chamfer part(1b) and control part (1s) each having a land (h) arranged at one end of a shank (Z), while the other end of the shank is preferably of rectangular section so as to serve for fitting-on, the working part has at least two cutting wings (V) and flutes (H) between the said cutting wings at least alongside the cutting wings, suitable to store the chip separated and to introduce cooing and/or lubricating media if necessary whereby the chamfer part (1_{b}) length within the working part (1) is equal to at least the half length of working part (1), **characterized by that** the width (v) of the cutting wings (V) is designed to a value not exceeding 0.2 to 0.02 times the tap-drill outer diameter (D) - i.e,. v ≦ 0.2 D to 0.02 D - while the core diameter (dₜ) of cutting wings to a value not exceeding 0.35 times the outer diameter of the tap-drill (D) - i.e. dₜ ≦ 0.35 D, and the land (h) of the chamfer part (1_{b}) length is designed as a plane surface in such a way that the relief angle (α) exceeds 5° and is preferably 15°.

2. Thread tapping cutting tool as in claim 1, **characterized by that**, in the case of through-hole tapping and/or pretapping by hand, the chamfer part (1_{b}) length is designed to at least 75 % of the working part (1) length.

3. Thread tapping cutting tool as in claim 1, **characterized by that**, in the case of dead-hole tapping and/or final tapping by hand, the working part (1) is of up to 10-pitch length and the chamfer part (1_{b}) length is equal to the length of control part (1ₛ).

4. Thread tapping cutting tool as in any of the claims 1 to 3, **characterized by that** the control part (1ₛ) has a land-relief, the value of which is up to 0.02mm.

5. Thread tapping cutting tool as in claim 3, **characterized by that** the working part (1) is of 6-pitch length.

6. Thread tapping cutting tool as in any of the claims 1 to 5, **characterized by that** the width (v) of cutting wings (V) and the core diameter (dₜ) are designed as follows:
v ≦ 0.056 D
dₜ ≦ 0.2 D to 0.25 D.

## Patentansprüche

1. Gewindeschneidwerkzeug, welches einen Arbeitsteil (1) aufweist, welches mit einem Anschnitteil (1b) und einem Steuerteil (1s) versehen ist, die beide eine Schneidfase (h) aufweisen und an einem Ende eines Schafts (Z) angeordnet sind, während das andere Ende des Schafts vorzugsweise rechteckigen Querschnitt hat, so daß er zur Montage dienen kann, wobei der Arbeitsteil wenigstens zwei Schneidflügel (V) und Kehlen (H) zwischen den Schneidflügeln wenigstens neben den Schneidflügeln aufweist, die für eine Speicherung der abgetrennten Späne und gegebenenfalls Einführung eines Kühl- und/oder Schmiermittels geeignet sind, wobei die Länge des Anschnitteils (1b) innerhalb des Arbeitsteils (1) wenigstens gleich der halben Länge des Arbeitsteils (1) ist, dadurch gekennzeichnet, daß die Breite (v) der Schneidflügel (V) auf einen Wert ausgelegt ist, der das 0,2- bis 0,02-fache des Gewindebohreraußendurchmessers (D) nicht überschreitet - d.h., v ≤ 0,2 D bis 0,02 D -, während der Kerndurchmesser (dₜ) von Schneidflügeln auf einen Wert ausgelegt ist, der das 0,35-fache des Außendurchmessers (D) des Gewindebohrers nicht überschreitet - d.h. dₜ ≤ 0,35 D, und die Schneidfase (h) der Anschnitteillänge (1b) als ebene Fläche in einer solchen Weise ausgelegt ist, daß der Anstellwinkel (α) 5° überschreitet und vorzugsweise 15° beträgt.

2. Gewindeschneidwerkzeug nach Anspruch 1, dadurch gekennzeichnet, daß im Falle eines Durchgangslochgewindeschneidens und/oder eines Vorschneidens von Hand die Länge des Anschnitteils (1b) auf wenigstens 75 % der Länge des Arbeitsteils (1) ausgelegt ist.

3. Gewindeschneidwerkzeug nach Anspruch 1, dadurch gekennzeichnet, daß im Falle eines Sackloch-Gewindeschneidens und/oder Fertiggewindeschneidens von Hand der Arbeitsteil (1) eine Länge von bis zu 10 Gängen hat und die Länge des Anschnitteils (1b) gleich der Länge des Steuerteils (1s) ist.

4. Gewindeschneidwerkzeug nach irgendeinem der Ansprüche 1 bis 3, dadurch gekennzeichnet, daß der Steuerteil (1s) einen Schneidfasenrückstand aufweist, dessen Wert bis zu 0,02 mm beträgt.

5. Gewindeschneidwerkzeug nach Anspruch 3, dadurch gekennzeichnet, daß der Arbeitsteil (1) eine Länge von 6 Ganghöhen hat.

6. Gewindeschneidwerkzeug nach irgendeinem der Ansprüche 1 bis 5, dadurch gekennzeichnet, daß die Breite (v) der Schneidflügel (V) und der Kerndurchmesser (dₜ) folgendermaßen ausgelegt sind:
v ≤ 0,056 D
dₜ ≤ 0,2 D bis 0,25 D.

## Revendications

1. Outil coupant de taraudage, qui comprend une partie de travail (1) munie d'une partie de chanfrein (1b) et d'une partie de commande (1s) ayant chacune un listel (k) et agencées à une extrémité d'une tige (Z), l'autre extrémité de la tige étant de préférence de section rectangulaire de manière à servir pour le montage, la partie de travail comprend au moins deux ailes coupantes (V) et des creux (H) entre lesdites ailes coupantes et au moins le long des ailes coupantes, adaptés pour accumuler les copeaux séparés et pour introduire des médiums de lubrification et/ou de refroidissement si nécessaire, de sorte que la longueur de la partie de chanfrein (1b) dans la partie de travail (1) est égale à au moins la moitié de la longueur de la partie de travail (1), caractérisé en ce que la largeur (v) des ailes coupantes (V) est fixée à une valeur n'excédant pas 0,2 à 0,02 fois le diamètre extérieur du taraud (D) (c'est-à-dire v≤0,2D à 0,02D) alors que le diamètre de noyau (dₜ) des ailes coupantes est fixé à une valeur n'excédant pas 0,35 fois le diamètre extérieur du taraud ( D) (c'est-à-dire dₜ≤0,35D), et le listel (h) de la longueur de la partie de chanfrein (1b) est conçu comme une surface plane de sorte que l'angle de dépouille (α) n'excède pas 5° et vaut de préférence 15°.

2. Outil selon la revendication 1, caractérisé en ce que dans le cas d'un taraudage d'un alésage traversant et/ou d'un prétaraudage à la main, la longueur de la partie de chanfrein (1b) est fixée à au moins 75% de la longueur de la partie de travail (1).

3. Outil selon la revendication 1, caractérisé en ce que dans le cas d'un taraudage d'un alésage borgne et/ou d'un taraudage final à la main, la partie de travail (1) est d'une longueur allant jusqu'à dix fois le pas et la longueur de partie de chanfrein (1b) est égale à la longueur de la partie de commande (1s).

4. Outil selon l'une quelconque des revendications 1 à 3, caractérisé en ce que la partie de commande (1s) a une dépouille de listel dont la valeur vaut jusqu'à 0,02 mm.

5. Outil selon la revendication 3, caractérisé on ce que la partie de travail (1) a une longueur de six pas.

6. Outil selon l'une quelconque des revendications 1 à 5, caractérisé en ce que la largeur (v) des ailes coupantes (V) et le diamètre de noyau (dₜ) sont fixés comme suit :
v≤0,056D
dₜ ≤ 0,2 D à 0,25 D.
